# EUROPÄISCHE PATENTSCHRIFT

(11) **EP 2 991 846 B1**
(45) Veröffentlichungstag und Bekanntmachung des Hinweises auf die Patenterteilung: **11.01.2017**
(21) Anmeldenummer: 14715848.9
(22) Anmeldetag: 05.04.2014
(51) Int. Cl.: B60K 5/12, F16F 1/38, B62D 21/11, F16F 13/10

(54) **AGGREGATELAGERANORDNUNG FÜR KRAFTFAHRZEUGE**
ENGINE SUPPORT ARRANGEMENT FOR MOTOR VEHICLES
ENSEMBLE DE SUPPORT DE MOTEUR POUR VÉHICULES AUTOMOBILES

(30) Priorität: 30.04.2013 DE 102013007460
(43) Veröffentlichungstag der Anmeldung: 09.03.2016
(73) Patentinhaber: Audi AG, 85045 Ingolstadt (DE)
(72) Erfinder: BUJAK, Marek, 91809 Wellheim (DE); VOLLMANN, Stefan, 85049 Ingolstadt/Gerolfing (DE)
(74) Vertreter: Reichert, Thomas Klaus
(86) Internationale Anmeldenummer: PCT/EP2014/000917
(87) Internationale Veröffentlichungsnummer: WO 2014/177245

(56) Entgegenhaltungen:
- EP-A2- 1 336 771
- EP-A2- 1 925 846
- DE-A1-102004 034 074
- DE-A1-102006 016 328
- DE-A1-102009 020 107

## Beschreibung

Die vorliegende Erfindung betrifft eine Aggregatelageranordnung für Kraftfahrzeuge gemäß dem Oberbegriff des Patentanspruchs 1.

Eine Aggregatelageranordnung der gattungsgemäßen Art zeigt beispielsweise die DE 10 2004 062 083 A1 oder DE 10 2005 033 509 B4, dessen Lagergehäuse mittels in Y-Richtung (Querrichtung) ausgerichtete Schraubverbindungen an einem karosseriefesten Trägerteil (dies kann der Fahrzeugaufbau unmittelbar oder ein daran befestigter Hilfsrahmen sein) des Kraftfahrzeugs befestigbar ist. Beim Gegenstand der ersteren Schrift ist ferner ein konsolenförmiges Stützteil vorgesehen, das mit dem Lagergehäuse des Aggregatelagers und einem am Trägerteil befestigten Querholm verschraubt ist, um somit eine verwindungssteife und die Trägerkonstruktion verstärkende Lageraufnahme zu schaffen.

Durch die DE 10 2004 034 074 B4 ist ein weiteres, an einem Hilfsrahmen zu befestigendes Aggregatelager bekannt, bei dem das Lagergehäuse durch zwei in Z-Richtung (vertikal) ausgerichtete Schraubverbindungen im Knotenbereich zwischen einem Längsholm und einem Querholm befestigt ist, wobei die eine Schraubverbindung zur Erzielung einer ecksteifen Lageraufnahme am Längsholm und die andere Schraubverbindung am Querholm angeordnet ist. Die Verwindungssteifigkeit der Lageraufnahme ist aber durch die in einer einheitlichen Verbindungsebene liegenden Schraubverbindungen nicht wesentlich erhöht.

Weiter ist aus der gattungsbildenden DE 10 2009 020 107 A1 eine Anordnung eines Aggregatelagers an einem Hilfsrahmen eines Kraftfahrzeugs bekannt, bei der im Eckbereich des Hilfsrahmens zwischen einem hilfsrahmenseitigen Längsträger und einem hilfsrahmenseitigen Querträger das Aggregatelager dergestalt angeordnet ist, dass dieses den Eckbereich aussteift. An ein Lagergehäuse des Aggregatelagers ist ein Lagerauge angeformt, das über eine an einem Ausleger des Längsträgers angeschweißte Haltekonsole über eine Schraubverbindung fest verschraubt ist. Ein Befestigungsflansch des Lagergehäuses liegt zudem auf einem Auflageflansch einer Konsole des Aggregatelagers auf und ist dort mittels in Z-Richtung ausgerichteter Schraubverbindungen festgelegt. Das Aggregatelager weist einen Lagerkern auf, der mit einer Motorstütze des Aggregates fest verschraubt ist. Der Lagerkern weist hier zudem nicht näher beschriebene diametral am Lagerkern gegenüberliegende Anschlagarme auf, die Schenkeln eines den Lagerkern überspannenden, U-förmigen Anschlagbügels des Aggregatelagers zugeordnet sind.

Weiter ist aus der FR 2 831 111 A1 ein mehrteiliger Aggregatelageraufbau bekannt, bei dem ein karosserieseitig festlegbares Lagerteil und ein aggregateseitig festlegbares Lagerteil mittelbar zum einen über ein erstes verbindendes Lagerelement verbunden sind, das über Elastomerlager schwenkbeweglich mit beiden Lagerteilen gekoppelt ist. Diesem ersten Verbindungselement parallel geschaltet ist ein weiteres über eine Elastomeranordnung abgestütztes Puffer- und Konsolenelement. Die Festlegung des karosserieseitigen Lagerteils erfolgt über sowohl in Z-Richtung als auch in Y-Richtung ausgerichtete Schraubverbindungen.

Ferner ist aus der JP 2012-240579 A ein Aggregatelager bekannt, bei dem ein Lagerkern von einem U-förmigen Anschlagbügel umgeben wird, wobei zwischen den Innenflächen des Anschlagbügels und dem Lagerkern Anschlagpuffer vorgesehen sind, die in zwei Raumrichtungen wirken. Aufgabe der Erfindung ist es, eine Aggregatelageranordnung für Kraftfahrzeuge anzugeben, die bei kompaktem Aufbau fertigungstechnisch einfach herstellbar und montagegünstig ausgebildet ist.

Die Lösung dieser Aufgabe ist in den Merkmalen des Patentanspruchs 1 angeführt. Vorteilhafte und besonders zweckmäßige Weiterbildungen der Erfindung sind Gegenstand der Unteransprüche.

Gemäß Anspruch 1 wird eine Aggregatelageranordnung für ein Kraftfahrzeug mit einem Aggregatelager vorgeschlagen, das ein Lagergehäuse, ein schwingungsdämpfendes Lager und einen mit einem Aggregat, insbesondere mit einer Aggregatestütze, verbindbaren Lagerkern aufweist, wobei das Lagergehäuse über wenigstens ein(e), vorzugsweise mehrere, nicht in Hochachsenrichtung, insbesondere nicht in Fahrzeughochachsenrichtung, ausgerichtete Befestigungseinrichtung bzw. Befestigungselement (nachfolgend wird stets die Begrifflichkeit Befestigungselement verwendet), die vorzugsweise eine Befestigungsschraube bzw. eine Schraubverbindung ist, verwindungssteif mit zumindest einem karosseriefesten Trägerteil verbunden ist. Das Lagergehäuse ist zudem mittels zumindest einem, im Wesentlichen in Hochachsenrichtung ausgerichteten Befestigungselement mit dem zumindest einen karosseriefesten Trägerteil verbunden.

Das Aggregatlager weist einen den Lagerkern überspannenden, U-förmigen Anschlagbügel auf, der mit dem Lagergehäuse fest verbunden ist, und wobei an dem Lagerkern diametral gegenüberliegend Anschlagarme ausgebildet sind, die in einer Grundstellung von den zugeordneten Schenkeln des Anschlagbügels einen definierten Spaltabstand aufweisen. Erfindungsgemäß ist vorgesehen, dass an den Innenflächen des Anschlagbügels und/oder am Lagerkern wenigstens ein, in eine definierte Richtung wirkender Anschlagpuffer angeordnet ist, und dass zwischen den Schenkeln des Anschlagbügels und den Anschlagarmen in eine definierte Richtung wirkende Anschlagpuffer vorgesehen sind, die an den Schenkeln und/oder an den Anschlagarmen angeordnet sind.

Über den Anschlagbügel können im Zusammenwirken mit den Anschlagarmen und dem Lagerkern besonders vorteilhaft, insbesondere in baulich einfacher und montagegünstiger Weise, für das schwingungsdämpfende Lager in allen Belastungsrichtungen entlastende Wegbegrenzungen realisiert werden, die somit sowohl in Längsrichtung, in Querrichtung sowie als Zuganschlag auch in Hochachsenrichtung wirken können. Insbesondere zwischen den Schenkeln und den Anschlagarmen können die Anschlagpuffer baulich einfach und kompakt bzw. mit geringem Bauvolumen vorgesehen werden, wobei die Anschlagpuffer konkret an den Schenkeln und/oder an den Anschlagarmen angeordnet sein können, und zwar bevorzugt dergestalt, dass auch trotz der Anordnung der Anschlagpuffer die definierten Spaltabstände eingehalten werden. Ein derartiges Anschlagkonzept für ein Aggregatelager ist somit zum einen baulich einfach zu realisieren und ermöglicht zum anderen einen äußerst kompakten Aufbau.

Mit dem erfindungsgemäßen Aufbau gelingt es weiter, mit geringem Mehraufwand am Lagergehäuse zwei unterschiedliche Verbindungsebenen (vertikal und horizontal) zu bilden, die ohne Verwendung eines Stützteils eine verwindungssteife Lageraufnahme bei gleichzeitiger Verstärkung des karosseriefesten Trägerteils sicherstellt. Neben der gewichtsgünstigeren Konstruktion wird somit auch eine vereinfachte Montage des Aggregatelagers am Trägerteil erzielt.

Das nicht in Hochachsenrichtung, insbesondere nicht in Fahrzeughochachsenrichtung (Z-Richtung), ausgerichtete wenigstens eine Befestigungselement ist dabei bevorzugt im Wesentlichen horizontal ausgerichtet und/oder durch eine Schraubverbindung gebildet. Alternativ oder zusätzlich kann das wenigstens eine Befestigungselement im Wesentlichen in wenigstens einer durch eine Querachse (Y-Achse bzw. Y-Richtung) und eine Längsachse (X-Achse bzw. X-Richtung), insbesondere durch eine Fahrzeugquerachse und Fahrzeuglängsachse, aufgespannten Horizontalebene liegen. Dadurch ergeben sich die gewünschten vorteilhaften Kraftflüsse bei einem insgesamt steifen Aufbau.

An dieser Stelle sei ausdrücklich erwähnt, dass sich die vorstehend bzw. nachstehend angegebenen Achsen bzw. Richtungen jeweils auf das Aggregatelager selbst bzw. den eingebauten oder montierten Zustand des Aggregatelagers und/oder auf die Fahrzeugachsen beziehen können.

Das zumindest eine, im Wesentlichen in Hochachsenrichtung, insbesondere in Fahrzeughochachsenrichtung (Z-Richtung), ausgerichtete Befestigungselement ist gemäß einer besonders bevorzugten Ausgestaltung gegenüber dem wenigstens einen nicht in Hochachsenrichtung, insbesondere Fahrzeughochachsenrichtung (Z-Richtung), ausgerichteten Befestigungselement in eben diese Hochachsenrichtung, insbesondere in Fahrzeughochachsenrichtung (Z-Richtung), gesehen höhenversetzt, insbesondere nach unten versetzt. Dadurch ergeben sich die gewünschten besonders vorteilhaften Kraftflüsse bei den entsprechenden Aggregatbewegungen im Fahrzeugbetrieb.

Das zumindest eine im Wesentlichen in Hochachsenrichtung, insbesondere in Fahrzeughochachsenrichtung (Z-Richtung), ausgerichtete Befestigungselement ist fertigungstechnisch und herstellungstechnisch vorteilhaft bevorzugt durch eine Schraubverbindung gebildet. Besonders bevorzugt kann hierbei eine in Hochachsenrichtung, insbesondere in Fahrzeughochachsenrichtung (Z-Richtung), ausgerichtete Befestigungsschraube der Schraubverbindung durch eine Schraubausnehmung in einem lagergehäuseseitigen Flanschansatz hindurch (und damit z.B. von oben her) in das zumindest eine Trägerteil eingeschraubt sein, insbesondere in einen Gewindebutzen des Trägerteils eingeschraubt sein. Alternativ dazu kann aber auch eine in Hochachsenrichtung, insbesondere in Fahrzeughochachsenrichtung (Z-Richtung), ausgerichtete Befestigungsschraube der Schraubverbindung durch eine Schraubausnehmung in dem zumindest einen Trägerteil hindurch (und damit zum Beispiel von unten her) in einen lagergehäuseseitigen Flanschansatz eingeschraubt sein, insbesondere in eine Gewindebohrung des lagergehäuseseitigen Flanschansatzes eingeschraubt sein.

An dem Lagergehäuse, insbesondere an einem das Lager aufnehmenden Aufnahmeauge des Lagergehäuses kann zudem eine, einen gummielastischen Anschlagpuffer tragende Plattform dergestalt angeordnet sein, insbesondere angeformt sein, dass der Anschlagpuffer bei einer definierten Aggregatverlagerung in eine Wirkverbindung mit dem Aggregat bringbar ist. Dadurch ist in einfacher Weise ein Druckanschlag geschaffen, der bei einem unzulässig starken Aggregateausschlag als Wegbegrenzer zur Vermeidung von Überbelastungen wirkt.

Weiter bevorzugt kann am Lagergehäuse, insbesondere an einem das Lager aufnehmenden Aufnahmeauge des Lagergehäuses, zwischen dem Flanschansatz und der in Hochachsenrichtung, insbesondere in Fahrzeughochachsenrichtung (Z-Richtung), darüber liegenden Plattform wenigstens eine Versteifungsrippe, vorzugsweise mehrere Versteifungsrippen, vorgesehen sein, die bei einer Druckbeaufschlagung neben einer vorteilhaften Kraftabstützung auch einen gezielten Kraftfluss in Richtung Flanschansatz bzw. in Richtung des wenigstens einen in Hochachsenrichtung, insbesondere in Fahrzeughochachsenrichtung (Z-Richtung), ausgerichteten Befestigungselementes bzw. Z-Verschraubung ermöglichen. Das heißt, dass zur Erzielung einer wirksamen Krafteinleitung von dem Druckanschlag in das Trägerteil zwischen dem Flanschansatz mit der zusätzlichen Befestigungsstelle und der in Hochachsenrichtung darüber liegenden Plattform mehrere Versteifungsrippen vorgesehen sein können.

Des weiteren können grundsätzlich am Lagergehäuse, insbesondere an einem das Lager aufnehmenden Aufnahmeauge des Lagergehäuses, in Hochachsenrichtung, insbesondere in Fahrzeughochachsenrichtung (Z-Richtung), verlaufende und voneinander in Umfangsrichtung beabstandete Versteifungsrippen angeformt sein, die eine vorteilhafte Lagerversteifung bewirken.

Gemäß einer besonders bevorzugten Ausgestaltung können diametral gegenüberliegend zangenförmige Backen als Anschlagarme ausgebildet sein, die die Schenkel des Anschlagbügels unter Zwischenschaltung eines definierten Leerwegs als definierten Spaltabstand umgreifen. Zwischen den Schenkeln und den Anschlagarmen sind dann auch bei dieser Ausführungsvariante die Anschlagpuffer vorgesehen, die wiederum an den Schenkeln und/oder an den Anschlagarmen angeordnet sein können.

Gemäß einer besonders bevorzugten konkreten Ausgestaltung sind zwischen den Schenkeln und den Anschlagarmen in Querachsenrichtung (Y-Richtung) wirkende Anschlagpuffer vorgesehen.

Ferner kann der an den Innenflächen des Anschlagbügels und/oder am Lagerkern angeordnete, wenigstens eine Anschlagpuffer in Längsrichtung (X-Richtung) und/oder in Hochachsenrichtung (Z-Richtung) wirken, z.B. dergestalt, dass dieser bei einer Anordnung am Anschlagbügel unmittelbar mit dem Lagerkern an dessen Außenflächen zusammenwirkt. Der besagte wenigstens eine Anschlagpuffer kann besonders zweckmäßig unmittelbar an den Anschlagbügel und/oder den Lagerkern anvulkanisiert sein. Der Anschlagbügel kann zum Beispiel montagegünstig auf den Lagerkern aufgesetzt bzw. aufgesteckt sein und zum Beispiel mit dem Lagergehäuse verschraubt werden. Alternativ dazu kann der Anschlagbügel aber ggf. auch integral mit dem Lagergehäuse ausgebildet sein, z.B. dort angegossen sein.

In einer weiteren, vorteilhaften Ausgestaltung der Erfindung können der Anschlagbügel, insbesondere die Schenkel des Anschlagbügels, und ein Befestigungsflansch des Lagergehäuses über wenigstens ein, bevorzugt mehrere, gemeinsame, in eine definierte Richtung, insbesondere in Querachsenrichtung (Y-Richtung), ausgerichtetes Befestigungselement, bevorzugt eine Befestigungsschraube, am Trägerteil befestigbar sein. Z.B. kann eine Befestigungsschraube als Befestigungselement von der Trägerteilseite aus durch den Befestigungsflansch hindurch in eine Gewindebohrung des Anschlagbügels eingeschraubt sein. Auch eine Umkehrung der Schraubrichtung ist selbstverständlich möglich. Daraus resultiert eine einfache und gut zugängliche Montage des Aggregatelagers am Trägerteil. Auch eine Anbindung mittels einer Schraubmutterverbindung wäre grundsätzlich möglich.

Weiter kann das Lagergehäuse des Aggregatelagers gemäß einer besonders bevorzugten weiteren Ausgestaltung über zwei in Querachsenrichtung (Y-Richtung) und eine in Hochachsenrichtung (Z-Richtung) ausgeführte Schraubverbindung an einem Rahmenkopf eines Hilfsrahmens mit Längsholmen und wenigstens einem Querholm befestigt sein, wobei der Rahmenkopf im Bereich der in Hochachsenrichtung ausgerichteten Schraubverbindung einen Ausleger aufweist, der mit dem Lagergehäuse und dem bzw. einem Querholm des Hilfsrahmens fest verbunden ist. Fertigungstechnisch und herstellungstechnisch vorteilhaft kann das Lagergehäuse zudem materialeinheitlich und/oder einstückig ausgebildet sein, insbesondere als einteiliges Gussteil hergestellt sein.

Ferner wird ein Aggregatelager für eine Aggregatlageranordnung beansprucht, wie diese vorstehend beschrieben ist. Hierdurch ergebn sich die gleichen Vorteile, so dass diesbezüglich auf die zuvor gemachten Ausführungen verwiesen wird.

Ein Ausführungsbeispiel der Erfindung ist im Folgenden anhand der beigefügten Zeichnung näher erläutert.

Es zeigen:
- Fig. 1: eine raumbildliche Ansicht eines an einem teilweise dargestellten Hilfsrahmen eines Kraftfahrzeugs mittels dreier Schraubverbindungen zu befestigenden Aggregatelagers; und
- Fig. 2: das Aggregatelager gemäß Fig. 1 in Einzeldarstellung.

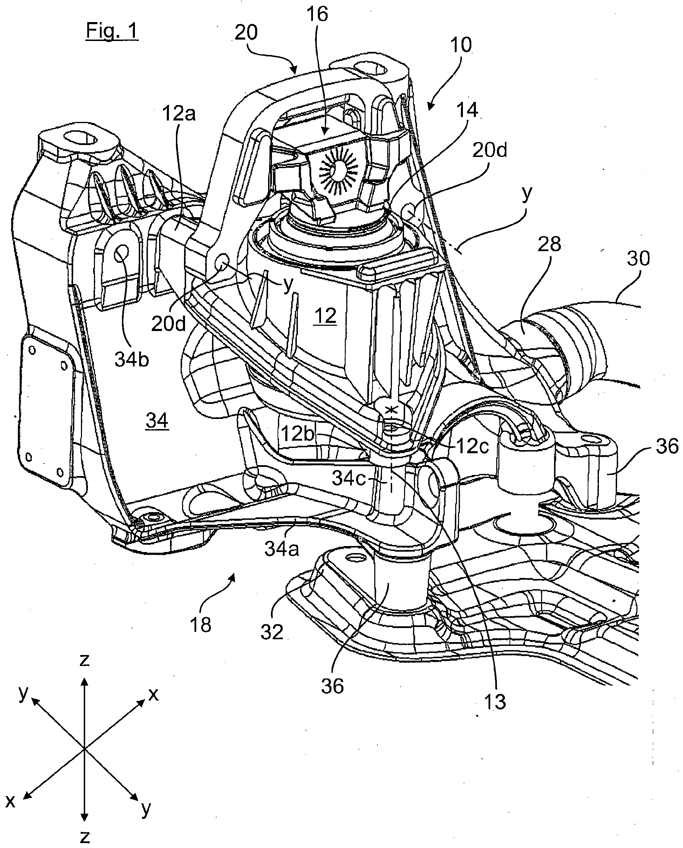

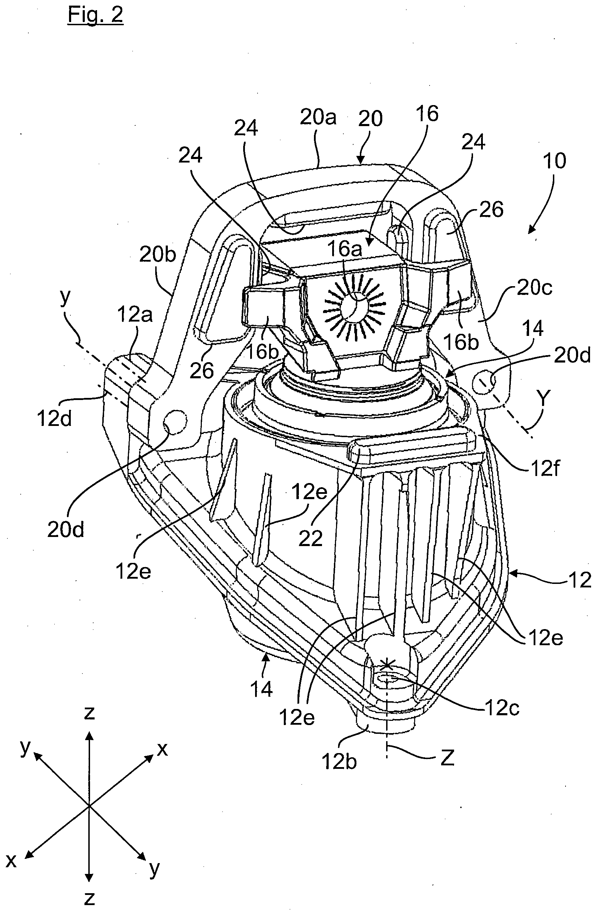

Das in den Fig. 1 und 2 dargestellte Aggregatelager 10 weist ein äußeres Lagergehäuse 12 auf, das zum Beispiel bzw. bevorzugt als Gussformteil hergestellt ist und in das ein schwingungsisolierendes Lager 14 integriert ist.

Das schwingungsisolierende Lager 14 (zum Beispiel gemäß Fig. 1 der DE 10 2005 033 509 B4) kann ein Gummi-Metalllager und/oder ein hydraulisch dämpfendes Lager und/oder ein aktiv in der Dämpfungscharakteristik veränderliches Lager sein und weist nach oben abragend einen Lagerkern 16 auf, an dem ein Antriebsaggregat bzw. Aggregat, zum Beispiel ein Motor oder ein Getriebe, des Kraftfahrzeugs, insbesondere über eine Aggregatstütze (nicht dargestellt) befestigbar ist. Der Lagerkern 16 weist dazu eine Gewindebohrung 16a und entsprechende Führungsflächen (ohne Bezugszeichen) auf.

Das ein Aufnahmeauge aufweisende bzw. becherförmige, nach oben offene Lagergehäuse 12 ist mit einem vertikal angeordneten Befestigungsflansch 12a versehen, an den ein nach oben abragender, umgekehrt U-förmiger Lagerbügel 20 mit einem Basisabschnitt 20a und zwei Schenkeln 20b, 20c (Fig. 2) anschließt.

In dem Befestigungsflansch 12a und an den freien Enden der Schenkel 20b, 20c des Anschlagbügels 20 sind in Y-Richtung (hier bevorzugt die Querrichtung des Kraftfahrzeugs, vergleiche Koordinatenkreuz in Fig. 2) ausgerichtete, in einer Flucht liegende Bohrungen 12d bzw. in den Schenkeln 20b, 20c Gewindebohrungen 20d vorgesehen, die in noch zu beschreibender Weise die beiden in Y-Richtung ausgeführten Schraubverbindungen des Lagergehäuses 12 mit dem in Fig. 1 teilweise dargestellten Hilfsrahmen 18 bilden.

Ferner ist an das Lagergehäuse 12 ein zur Fahrzeugmitte ragender und zu den Y-Schraubverbindungen höhenversetzter bzw. tiefer liegender Flanschansatz 12b angeformt, der eine horizontale Verbindungsebene bildend eine in Z-Richtung (vertikal) ausgerichtete Bohrung 12c aufweist, durch die hindurch das Lagergehäuse 12 mittels einer in Z-Richtung ausgerichteten Schraubverbindung 13 bzw. Befestigungsschraube (nur schematisch dargestellt) mit dem Hilfsrahmen 18 fest verbindbar ist. Die Schraubverbindung kann dabei so ausgeführt sein, dass entweder von oben her in den Hilfsrahmen eingeschraubt wird oder entsprechend umgekehrt von unten, vom Hilfsrahmen her in das Lagergehäuse 12 eingeschraubt wird.

An dem Lagergehäuse 12 sind des Weiteren mehrere in vertikaler Richtung ausgerichtete, radial abragende und umfangsversetzte Versteifungsrippen 12e und eine von der dem Lagerkern 16 zugewandten Stirnseite ausgebildete, etwa horizontale Plattform 12f vorgesehen, wobei mehrere Versteifungsrippen 12e zwischen dem Flanschansatz 12b und der Plattform 12f an der Außenwand des Aufnahmeauges 15 verlaufen.

Die angeformte Plattform 12f trägt einen gummielastischen Anschlagpuffer 22, der in nicht dargestellter Weise mit der an den Lagerkern 16 angeschlossenen Aggregatstütze einen Druckanschlag in Z-Richtung bzw. einen Wegbegrenzer für Schwingungsausschläge des Antriebsaggregats bzw. der Aggregatstütze bildet.

Ferner wirkt der Anschlagbügel 20 als Wegbegrenzer für Schwingungsausschläge bzw. Aggregateverlagerungen in Y-, X- und Z-Richtung.

Dazu sind hier beispielhaft an den Schenkeln 20b, 20c und an dem Basisabschnitt 20a des Lagerbügels 20 an deren/dessen Innenflächen Anschlagpuffer 24 anvulkanisiert, die in unmittelbarem Zusammenwirken mit den Außenflächen des ungefähr würfelförmigen Lagerkerns 16 Wegbegrenzer bilden, die in X-Richtung (Längsrichtung) und in Z-Richtung (hier als Zuganschlag) wirken.

Des Weiteren sind hier beispielhaft an den Seitenflächen der Schenkel 20b, 20c des Anschlagbügels 20 gummielastische Anschlagpuffer 26 anvulkanisiert, die im Zusammenwirken mit an den Lagerkern 16 angeformten, zangenförmigen bzw. die Schenkel 20b, 20c umgreifenden, einen definierten Leerweg aufweisenden Backen 16b eine Wegbegrenzung in Y-Richtung bilden, also eine Abstützung des Lagers 14 zum Beispiel bei Querbeschleunigungen des Kraftfahrzeugs darstellen.

Der Anschlagbügel 20 mit den Anschlagpuffern 24, 26 kann bei der Montage des Aggregatelagers 12 über den Lagerkern 16 von oben aufgeschoben und sodann befestigt werden. Alternativ könnte der Anschlagbügel 20 aber auch bereits integral mit dem Lagergehäuse 12 verbunden sein, z.B. dort angegossen sein.

Der nur teilweise dargestellte, in der Draufsicht etwa rechteckförmige Hilfsrahmen 18 (Fig. 1) setzt sich beispielsweise aus in Fahrzeuglängsrichtung verlaufenden Längsholmen 28 (es ist nur der linke Längsholm ersichtlich) und aus zwei Querholmen 30, 32 zusammen, die selbstverständlich auch als Schubfeld ausgebildet sein können.

Dabei weisen die Längsholme 28 jeweils einen nach oben abragenden Rahmenkopf 34, der z.B. als Gussknoten ausgebildet ist, auf, über den der Hilfsrahmen 18 mit nicht dargestellten Längsträgern des Fahrzeugaufbaus verbunden ist. Die Längsholme 28 gehen ferner über Krümmungsabschnitte in den vorderen Querholm 30 über, während der hintere, zum Beispiel durch ein Blechpressteil gebildete Querholm 32 an jeweils zwei Befestigungsstellen 36 mit den Rahmenköpfen 34 verschraubt ist.

Die Rahmenköpfe 34 des Hilfsrahmens 18 weisen etwa horizontal zur Fahrzeugmitte ragende, angeformte Ausleger 34a auf, an denen sowohl der hintere Querholm 32 befestigt als auch die in Z-Richtung ausgerichtete Schraubverbindung 13 mit dem Lagergehäuse 12 des Aggregatelagers 10 ausgeführt ist.

Zur Befestigung des Aggregatelagers 10 bzw. dessen Lagergehäuse 12 am Hilfsrahmen 18 bzw. am als Gussformteil ausgebildeten Rahmenkopf 34 sind im Rahmenkopf 34 in Y-Richtung Bohrungen 34b (es ist nur eine freiliegende, einem Versetzen des Aggregatelagers 10 dienende Bohrung ersichtlich) eingebracht, über die das Lagergehäuse 12 mittels entsprechender Befestigungsschrauben (nicht dargestellt) durch die Bohrungen 12d im Befestigungsflansch 12a hindurch und über die Gewindebohrungen 20d im Anschlagbügel 20 befestigbar ist. Alternativ könnte anstelle des Gewindes in den Bohrungen 20d aber auch eine Schraubmutterverbindung vorgesehen sein.

Des Weiteren ist in dem Ausleger 34a des Rahmenkopfes 34 ein Gewindebutzen 34c ausgebildet, in die durch den Flanschansatz 12b bzw. die Bohrung 12c des Lagergehäuses 12 in Z-Richtung bzw. vertikal die Befestigungsschraube 13 von oben nach unten einschraubbar ist.

Das Lagergehäuse 12 ist dadurch mittels dreier Befestigungsschrauben bzw. mittels in zwei zueinander höhenversetzten und im Wesentlichen rechtwinkelig geneigten Verbindungsebenen Y-Z verwindungssteif mit den Rahmenköpfen 34 bzw. mit dem Hilfsrahmen 18 verbunden.

Das Lagergehäuse 12 kann wie dargestellt einteilig oder gegebenenfalls wie aus der DE 10 2005 033 509 B4 bekannt mehrteilig ausgebildet sein. Anstelle der beschriebenen Dreipunkt-Befestigung können gegebenenfalls auch vier wie ausgeführt versetzte Schraubverbindungen zweckmäßig sein.

## Patentansprüche

1. Aggregatelageranordnung für ein Kraftfahrzeug, mit einem Aggregatelager (10), das ein Lagergehäuse (12), ein schwingungsdämpfendes Lager (14) und einen mit einem Aggregat verbindbaren Lagerkern (16) aufweist, wobei das Lagergehäuse (12) über wenigstens ein, nicht in Hochachsenrichtung (Z-Richtung) ausgerichtetes Befestigungselement verwindungssteif mit zumindest einem karosseriefesten Trägerteil verbunden ist, wobei das Lagergehäuse (12) zudem mittels zumindest einem, im Wesentlichen in Hochachsenrichtung (Z-Richtung), ausgerichteten Befestigungselement (13) mit dem zumindest einen karosseriefesten Trägerteil (34) verbunden ist, wobei das Aggregatlager (10) einen den Lagerkern (16) überspannenden, U-förmigen Anschlagbügel (20) aufweist, der mit dem Lagergehäuse (12) fest verbunden ist, und wobei an dem Lagerkern (16) diametral gegenüberliegende Anschlagarme (16b) ausgebildet sind, die in einer Grundstellung von den zugeordneten Schenkeln (20b, 20c) des Anschlagbügels (20) einen definierten Spaltabstand aufweisen, **dadurch gekennzeichnet, dass** an den Innenflächen des Anschlägbügels (20) und/oder am Lagerkern (16) wenigstens ein, in eine definierte Richtung wirkender Anschlagpuffer (24) angeordnet ist, und dass zwischen den Schenkeln (20b, 20c) des Anschlagbügels (20) und den Anschlagarmen (16b) in eine definierte Richtung wirkende Anschlagpuffer (26) vorgesehen sind, die an den Schenkeln (20b, 20c) und/oder an den Anschlagarmen (16b) angeordnet sind.

2. Aggregatelageranordnung nach Anspruch 1, **dadurch gekennzeichnet, dass** das nicht in Hochachsenrichtung (Z-Richtung) ausgerichtete wenigstens eine Befestigungselement im Wesentlichen horizontal ausgerichtet ist und/oder durch eine Schraubverbindung gebildet ist und/oder im Wesentlichen in wenigstens einer durch eine Querachse (Y-Achse) und eine Längsachse (X-Achse), insbesondere durch eine Fahrzeugquerachse und Fahrzeuglängsachse, aufgespannten Horizontalebene liegt.

3. Aggregatelageranordnung nach Anspruch 1 oder 2, **dadurch gekennzeichnet, dass** das zumindest eine, im Wesentlichen in Hochachsenrichtung (Z-Richtung) ausgerichtete Befestigungselement (13) gegenüber dem wenigstens einen nicht in Hochachsenrichtung (Z-Richtung) ausgerichteten Befestigungselement in Hochachsenrichtung (Z-Richtung) gesehen höhenversetzt ist, insbesondere nach unten versetzt ist.

4. Aggregatelageranordnung nach einem der vorhergehenden Ansprüche, **dadurch gekennzeichnet, dass** das zumindest eine im Wesentlichen in Hochachsenrichtung (Z-Richtung) ausgerichtete Befestigungselement (13) durch eine Schraubverbindung gebildet ist.

5. Aggregatelageranordnung nach Anspruch 4, **dadurch gekennzeichnet, dass** eine in Hochachsenrichtung (Z-Richtung) ausgerichtete Befestigungsschraube der Schraubverbindung durch eine Schraubausnehmung (12c) in einem lagergehäuseseitigen Flanschansatz (12b) hindurch in das zumindest eine Trägerteil (34) eingeschraubt ist oder dass eine in Hochachsenrichtung (Z-Richtung) ausgerichtete Befestigungsschraube der Schraubverbindung durch eine Schraubausnehmung in dem zumindest einen Trägerteil (34) hindurch in einen lagergehäuseseitigen Flanschansatz (12b) eingeschraubt ist.

6. Aggregatelageranordnung nach einem der vorhergehenden Ansprüche, **dadurch gekennzeichnet, dass** an dem Lagergehäuse (12), insbesondere an einem das Lager (14) aufnehmenden Aufnahmeauge des Lagergehäuses (12), eine, einen gummielastischen Anschlagpuffer (22) tragende Plattform (12f) dergestalt angeordnet, insbesondere angeformt ist, dass der Anschlagpuffer (22) bei einer definierten Aggregatverlagerung in eine Wirkverbindung mit dem Aggregat bringbar ist.

7. Aggregatelageranordnung nach Anspruch 5 oder 6, **dadurch gekennzeichnet, dass** am Lagergehäuse (12), insbesondere an einem das Lager (14) aufnehmenden Aufnahmeauge des Lagergehäuses (12), zwischen dem Flanschansatz (12b) und der in Hochachsenrichtung (Z-Richtung) darüber liegenden Plattform (12f) wenigstens eine Versteifungsrippe (12e) vorgesehen ist.

8. Aggregatelageranordnung nach einem der vorhergehenden Ansprüche, **dadurch gekennzeichnet, dass** am Lagergehäuse (12), insbesondere an einem das Lager (14) aufnehmenden Aufnahmeauge des Lagergehäuses (12), in Hochachsenrichtung (Z-Richtung) verlaufende und voneinander in Umfangsrichtung beabstandete Versteifungsrippen (12e) angeformt sind.

9. Aggregatelageranordnung nach einem der vorhergehenden Ansprüche, **dadurch gekennzeichnet, dass** an dem Lagerkern (16) diametral gegenüberliegende zangenförmige Backen als Anschlagarme (16b) ausgebildet sind, die die Schenkel (20b, 20c) des Anschlagbügels (20) unter Zwischenschaltung eines definierten Leerwegs als definierten Spaltabstand umgreifen.

10. Aggregatelageranordnung nach einem der vorhergehenden Ansprüche, **dadurch gekennzeichnet, dass** zwischen den Schenkeln (20b, 20c) und den Anschlagarmen in Querachsenrichtung (Y-Richtung) wirkende Anschlagpuffer (26) vorgesehen sind, die an den Schenkeln (20b, 20c) und/oder an den Anschlagarmen (15b) angeordnet sind.

11. Aggregatelageranordnung nach einem der vorhergehenden Ansprüche, **dadurch gekennzeichnet, dass** der an den Innenflächen des Anschlagbügels (20) und/oder am Lagerkern (16) angeordnete, wenigstens eine Anschlagpuffer (24) in Längsrichtung (X-Richtung) und/oder in Hochachsenrichtung (Z-Richtung) wirkt.

12. Aggregatelageranordnung nach einem der vorhergehenden Ansprüche, **dadurch gekennzeichnet, dass** der Anschlagbügel (20), insbesondere die Schenkel (20b, 20c) des Anschlagbügels (20), und ein Befestigungsflansch (12a) des Lagergehäuses (12) über wenigstens ein gemeinsames, in eine definierte Richtung, insbesondere in Querachsenrichtung (Y-Richtung), ausgerichtetes Befestigungselement, insbesondere eine Befestigungsschraube, am Trägerteil (34) befestigt ist.

13. Aggregatelageranordnung nach einem der vorhergehenden Ansprüche, **dadurch gekennzeichnet, dass** das Lagergehäuse (12) über zwei in Querachsenrichtung (Y-Richtung) und eine in Hochachsenrichtung (Z-Richtung) ausgeführte Schraubverbindungen an einem Rahmenkopf (34) eines Hilfsrahmens (18) mit Längsholmen (28) und wenigstens einem Querholm (30, 32) befestigt ist, wobei der Rahmenkopf (34) im Bereich der in Hochachsenrichtung ausgerichteten Schraubverbindung einen Ausleger (34a) aufweist, der mit dem Lagergehäuse (12) und dem bzw. einem Querholm (32) des Hilfsrahmens (18) fest verbunden ist.

14. Aggregatelageranordnung nach einem der vorhergehenden Ansprüche, **dadurch gekennzeichnet, dass** das Lagergehäuse (12) materialeinheitlich und/oder einstückig ausgebildet ist, insbesondere als einteiliges Gussteil hergestellt ist.

## Claims

1. Assembly bearing arrangement for a motor vehicle, with an assembly bearing (10) comprising a bearing housing (12), a vibration-damping bearing (14) and a bearing core (16) connectable to an assembly, wherein the bearing housing (12) is connected, via at least one fastening element oriented not in a vertical axis direction (Z direction), torsion-resistantly to at least one carrier part fixed to the body, wherein the bearing housing (12) is further connected, via at least one fastening element (13) oriented substantially in the vertical axis direction (Z direction), to the at least one carrier part (34) fixed to the body, wherein the assembly bearing (10) comprises a U-shaped stop bracket (20) configured to bridge the bearing core (16), which is firmly connected to the bearing housing (12), and wherein diametrically opposite stop arms (16b) are formed on the bearing core (16) which, in a basic position, are spaced apart from the assigned legs (20b, 20c) of the stop bracket (20) by a defined gap distance, **characterized in that** at least one stop buffer (24) acting in a defined direction is arranged on the inner surfaces of the stop bracket (20) and/or the bearing core (16), and stop buffers (26) acting in a defined direction are provided between the legs (20b, 20c) of the stop bracket (20) and the stop arms (16b), the stop buffers being arranged on the legs (20b, 20c) and/or on the stop arms (16b).

2. Assembly bearing arrangement according to claim 1, **characterized in that** the at least one fastening element not oriented in a vertical axis direction (Z direction) is aligned substantially horizontally and/or formed by a screw connection and/or lies substantially in at least one horizontal plane spanned by a transverse axis (Y axis) and a longitudinal axis (X axis), in particular by a vehicle transverse axis and a vehicle longitudinal axis.

3. Assembly bearing arrangement according to claim 1 or 2, **characterized in that** the at least one fastening element (13) substantially oriented in a vertical axis direction (Z direction) is vertically offset in relation to the at least one fastening element not oriented in a vertical axis direction (Z direction), as viewed in the vertical axis direction (Z direction), in particular is vertically offset downwards.

4. Assembly bearing arrangement according to any of the preceding claims, **characterized in that** the at least one fastening element (13) substantially oriented in a vertical axis direction (Z direction) is formed by a screw connection.

5. Assembly bearing arrangement according to claim 4, **characterized in that** a fastening screw of the screw connection, oriented in a vertical axis direction (Z direction), is bolted into the at least one carrier part (34) via a screw bore (12c) through the flanged collar (12b) of the bearing housing, or a fastening screw of the screw connection, oriented in a vertical axis direction (Z direction), is bolted into a flanged collar (12b) of the bearing housing via a screw bore through the at least one carrier part (34).

6. Assembly bearing arrangement according to any of the preceding claims, **characterized in that** a platform (12f) supporting a rubber-elastic stop buffer (22) is arranged on the bearing housing (12), in particular formed on a receiving eye of the bearing housing (12) for receiving the bearing (14), such that the stop buffer (22) is able to come into operative contact with the assembly when the assembly shifts by a defined distance.

7. Assembly bearing arrangement according to claim 5 or 6, **characterized in that** at least one reinforcement rib (12e) is provided on the bearing housing (12), in particular on a receiving eye of the bearing housing (12) for receiving the bearing (14), between the flanged collar (12b) and the platform (12f) lying above the flanged collar in the vertical axis direction (Z direction).

8. Assembly bearing arrangement according to any of the preceding claims, **characterized in that** reinforcing ribs (12e) extending in the vertical axis direction (Z direction) and spaced-apart in circumferential direction are formed on the bearing housing (12), in particular on a receiving eye of the bearing housing (12) for receiving the bearing (14).

9. Assembly bearing arrangement according to any of the preceding claims, **characterized in that** stop arms (16b) are formed by diametrically opposite tong-like jaws on the bearing core (16), the stop arms embracing the legs (20b, 20c) of the stop bracket (20) at a defined gap distance therebetween to establish a defined free travel.

10. Assembly bearing arrangement according to any of the preceding claims, **characterized in that** stop buffers (26) acting in a transverse axis direction (Y direction) are provided between the legs (20b, 20c) and the stop arms, the stop buffers being arranged on the legs (20b, 20c) and/or on the stop arms (15b).

11. Assembly bearing arrangement according to any of the preceding claims, **characterized in that** the at least one stop buffer (24) which is arranged on the inner surfaces of the stop bracket (20) and/or the bearing core (16) acts in a longitudinal direction (X direction) and/or in a vertical axis direction (Z direction).

12. Assembly bearing arrangement according to any of the preceding claims, **characterized in that** the stop bracket (20), in particular the legs (20b, 20c) of the stop bracket (20), and a mounting flange (12a) of the bearing housing (12) are secured to the carrier part (34) via at least one common fastening element, in particular a fastening screw, oriented in a defined direction, in particular in a transverse axis direction (Y direction).

13. Assembly bearing arrangement according to any of the preceding claims, **characterized in that** the bearing housing (12) is secured to a frame head (34) of a subframe (18) having longitudinal beams (28) and at least one crossbeam (30, 32) via two screw connections in a transverse axis direction (Y direction) and a screw connection in the vertical axis direction (Z direction), wherein the frame head (34) has an extension (34a) in the area of the screw connection in the vertical axis direction, which is firmly connected with the bearing housing (12) and the or a crossbeam (32) of the subframe (18).

14. Assembly bearing arrangement according to any of the preceding claims, **characterized in that** the bearing housing (12) is made from a same material and/or formed in one piece, in particular is formed as a single-piece casting.

## Revendications

1. Ensemble formant palier d'unité pour un véhicule automobile, comprenant un palier d'unité (10), qui présente un carter de palier (12), un palier (14) amortissant les oscillations et un noyau de palier (16) pouvant être relié à une unité, le carter de palier (12) étant relié sans torsion à au moins une partie porteuse solidaire de la carrosserie par l'intermédiaire au moins d'un élément de fixation non orienté dans la direction de l'axe vertical (direction Z), le carter de palier (12) étant assemblé de plus sans torsion à l'au moins une partie porteuse (34) solidaire de la carrosserie au moyen au moins d'un élément de fixation (13) orienté sensiblement dans la direction de l'axe vertical (direction Z), le palier d'unité (10) présentant un étrier de butée (20) en forme de U passant par-dessus le noyau de palier (16), lequel est relié de manière solidaire au carter de palier (12), et des bras de butée (16b) diamétralement opposés étant réalisés au niveau du noyau de palier (16), lesquels présentent un interstice d'écartement défini dans une position de base des branches (20b, 20c) associées de l'étrier de butée (20), **caractérisé en ce qu**'au moins un tampon de butée (24) agissant dans une direction définie est disposé au niveau des surfaces intérieures de l'étrier de butée (20) et/ou au niveau noyau de palier (16), et en ce que sont prévus, entre les branches (20b, 20c) de l'étrier de butée (20) et les bras de butée (16b), des tampons de butée (26) agissant dans une direction définie, lesquels sont disposés au niveau des branches (20b, 20c) et/ou au niveau des bras de butée (16b).

2. Ensemble formant palier d'unité selon la revendication 1, **caractérisé en ce que** l'au moins un élément de fixation non orienté dans la direction de l'axe vertical (direction Z) est orienté sensiblement de manière horizontale et/ou est formé par un assemblage vissé et/ou se trouve sensiblement dans au moins un plan horizontal passant par un axe transversal (axe Y) et par un axe longitudinal (axe X), en particulier par un axe transversal du véhicule et par un axe longitudinal du véhicule.

3. Ensemble formant palier d'unité selon la revendication 1 ou 2, **caractérisé en ce que** l'au moins un élément de fixation (13) orienté sensiblement dans la direction de l'axe vertical (direction Z) est décalé en hauteur vu dans la direction d'axe vertical (direction Z), en particulier vers le bas, par rapport à l'au moins un élément de fixation non orienté dans la direction de l'axe vertical (direction Z).

4. Ensemble formant palier d'unité selon l'une quelconque des revendications précédentes, **caractérisé en ce que** l'au moins un élément de fixation (13) orienté sensiblement dans la direction de l'axe vertical (direction Z) est formé par un assemblage vissé.

5. Ensemble formant palier d'unité selon la revendication 4, **caractérisé en ce qu'**une vis de fixation, orientée dans la direction de l'axe vertical (direction Z), de l'assemblage vissé est vissée, à travers un évidement fileté (12c) dans un bout de bride (12b) situé du côté du carter de palier, dans l'au moins une partie porteuse (34), ou **en ce qu'**une vis de fixation, orientée dans la direction de l'axe vertical (direction Z), de l'assemblage vissé est vissée, à travers un évidement fileté dans l'au moins une partie porteuse (34), dans un bout de bride (12b) situé du côté du carter de palier.

6. Ensemble formant palier d'unité selon l'une quelconque des revendications précédentes, **caractérisé en ce qu'**une plate-forme (12f) portant un tampon de butée (22) élastique est disposée, en particulier est formée au niveau du carter de palier (12), en particulier au niveau d'un oeillet de réception, recevant le palier (14), du carter de palier (12) de telle manière que le tampon de butée (22) peut être amené à coopérer avec l'unité lors d'un déplacement d'unité défini.

7. Ensemble formant palier d'unité selon la revendication 5 ou 6, **caractérisé en ce qu'**au moins une nervure de renfort (12e) est prévue au niveau du carter de palier (12), en particulier au niveau d'un oeillet de réception, recevant le palier (14), du carter de palier (12) entre le bout de bride (12b) et la plate-forme (12f) située au-dessus dans la direction de l'axe vertical (direction Z).

8. Ensemble formant palier d'unité selon l'une quelconque des revendications précédentes, **caractérisé en ce que** des nervures de renfort (12e) s'étendant dans la direction de l'axe vertical (direction Z) et écartées les unes des autres dans la direction périphérique sont formées au niveau du carter de palier (12), en particulier au niveau d'un oeillet de réception, recevant le palier (14), du carter de palier (12).

9. Ensemble formant palier d'unité selon l'une quelconque des revendications précédentes, **caractérisé en ce que** des mâchoires diamétralement opposées en forme de pince sont réalisées en tant que bras de butée (16b) au niveau du noyau de palier (16), lesquelles entourent les branches (20b, 20c) de l'étrier de butée (20) en intercalant un vide défini en tant qu'interstice d'écartement défini.

10. Ensemble formant palier d'unité selon l'une quelconque des revendications précédentes, **caractérisé en ce que** sont prévus, entre les branches (20b, 20c) et les bras de butée, des tampons de butée (26) agissant dans la direction d'axe transversal (direction Y), lesquels sont disposés au niveau des branches (20b, 20c) et/ou au niveau des bras de butée (15b).

11. Ensemble formant palier d'unité selon l'une quelconque des revendications précédentes, **caractérisé en ce que** l'au moins un tampon de butée (24) disposé au niveau des surfaces intérieures de l'étrier de butée (20) et/ou au niveau du noyau de palier (16) agit dans la direction longitudinale (direction X) et/ou dans la direction de l'axe vertical (direction Z).

12. Ensemble formant palier d'unité selon l'une quelconque des revendications précédentes, **caractérisé en ce que** l'étrier de butée (20), en particulier les branches (20b, 20c) de l'étrier de butée (20), et une bride de fixation (12a) du carter de palier (12) sont fixés au niveau de la partie porteuse (34) par l'intermédiaire au moins d'un élément de fixation commun, en particulier une vis de fixation, orienté dans une direction définie, en particulier dans la direction d'axe transversale (direction Y).

13. Ensemble formant palier d'unité selon l'une quelconque des revendications précédentes, **caractérisé en ce que** le carter de palier (12) est fixé au niveau d'une tête de châssis (34) d'un faux-châssis (18) comprenant des longerons (28) et au moins une traverse (30, 32) par l'intermédiaire de deux assemblages vissés exécutés dans la direction d'axe transversal (direction Y) et d'un assemblage vissé exécuté dans la direction d'axe vertical (direction Z), la tête de châssis (34) présentant, dans la zone de l'assemblage vissé orienté dans la direction d'axe vertical, un avant-bras (34a), qui est relié de manière solidaire au carter de palier (12) et à la traverse ou à une traverse (32) du faux-châssis (18).

14. Ensemble formant palier d'unité selon l'une quelconque des revendications précédentes, **caractérisé en ce que** le carter de palier (12) est réalisé en un seul matériau et/ou d'un seul tenant, en particulier est fabriqué sous la forme d'une pièce moulée en fonte en une partie.
